# EUROPEAN PATENT SPECIFICATION

(11) **EP 4 065 036 B1**
(45) Date of publication and mention of the grant of the patent: **02.07.2025**
(21) Application number: 20893542.9
(22) Date of filing: 26.11.2020
(51) Int. Cl.: A61C 1/00, A61C 19/00

(54) **DISINFECTION SYSTEM FOR WATER SYSTEM OF A DENTAL CARE UNIT AND METHOD FOR DESINFECTING WATER SYSTEM OF DENTAL CARE UNIT**
DESINFEKTIONSSYSTEM FÜR WASSERSYSTEM EINES ZAHNPFLEGEGERÄTES UND VERFAHREN ZUM DESINFIZIEREN DES WASSERSYSTEMS EINES ZAHNPFLEGEGERÄTES
SYSTÈME DE DÉSINFECTION POUR SYSTÈME D'EAU D'UNE UNITÉ DE SOINS DENTAIRES ET PROCÉDÉ DE DÉSINFECTION D'UN SYSTÈME D'EAU D'UNE UNITÉ DE SOINS DENTAIRES

(30) Priority: 26.11.2019 FI 20196017; 26.11.2019 FI 20196015
(43) Date of publication of application: 05.10.2022
(73) Proprietor: Planmeca OY, 00880 Helsinki (FI)
(72) Inventor: HYVÄRINEN, Pentti, 00880 Helsinki (FI)
(86) International application number: PCT/FI2020/050801
(87) International publication number: WO 2021/105567

(56) References cited:
- EP-A1- 1 044 655
- EP-A2- 0 403 442
- EP-A2- 2 047 818
- DE-B3- 102012 014 857
- US-A1- 2012 282 568
- US-A1- 2014 276 373

## Description

### FIELD OF TECHNOLOGY

This disclosure concerns dental care units. In particular, this disclosure concerns disinfection systems for dental care units.

### BACKGROUND

Most conventional dental care units comprise a water system configured to provide water for various purposes during dental treatment. Generally, a tab water is being used when the water quality is such that it can be safely used in dental care units. If not, typically, reservoirs specifically configured for bottled water are used. To this end, water systems of typical dental care units comprise an upright bottle-shaped container with a bottom part, a tapered neck, and a mouth equipped with sealing and support mechanisms for connecting the container to the rest of the water system.

Usage of such bottle-shaped container necessitates utilization of an inlet tube, extending through the mouth and neck of the container to the bottom thereof, to enable utilization of at least most of the water stored in the container. However, such inlet tubes may prove difficult to clean and disinfect.

According to some known systems, disinfectant is poured into the water container and supplied into the water system with the water. The amount of disinfectant may be calculated or estimated before pouring it into the container. Before disinfection, the dental care unit must be taken out of use and the cover of the dental care unit needs to be opened. The water container is taken out of the dental care unit and the disinfectant is poured into the water container outside of the dental care unit. The pouring is messy and the amount of disinfectant entering the water container may be something else than intended.

Publication EP 0403442 A2 discloses one disinfection system for handpieces of a dental surgery apparatus.

Considering the above, it may be desirable to develop new solutions related to dental care units and water disinfection systems thereof.

### SUMMARY

The invention is as defined in the independent claims.

This summary is provided to introduce a selection of concepts in a simplified form that are further described below in the Detailed Description. This Summary is not intended to identify key features or essential features of the claimed subject matter, nor is it intended to be used to limit the scope of the claimed subject matter. According to a first aspect, a disinfection system for a water system of a dental unit is provided. The water disinfection system comprises a vessel for receiving and holding liquids for the water system of the dental unit; a vessel holder for supporting the vessel inside the dental unit; and disinfectant container for storing disinfectant and a disinfectant supply line for supplying disinfectant from the disinfectant container into the vessel via the fluid duct. The system further comprises a weighing device for determining weight of any liquids in the vessel.

One of the advantages of embodiments of the system is that it is easier to clean and fill. The filling and refilling of the vessel and/or the disinfectant container may be done even during the operation, when the system is in use. Further, the amount of water and/disinfectant may be supplied automatically.

In an embodiment, the weighing device is arranged to measure the weight of the vessel holder, vessel and the liquid inside the vessel.

In an embodiment, the weighing device comprises a force-measuring scale arranged between the vessel holder and the dental unit.

In an embodiment, the system comprises pivoting means arranged to pivot the vessel holder about it, and the weighing device is arranged on the other side of the vessel than the pivoting means.

In an embodiment, the system comprises a disinfectant valve arranged to control the flow of disinfectant supplied into the vessel.

In an embodiment, the system comprises a water controlling valve arranged to control the flow of water supplied into the vessel.

In an embodiment, the system comprises a control unit for executing the disinfection process.

According to the invention, the control unit is configured to calculate the needed amount of disinfectant for achieving a pre-determined concentration of the disinfectant and the water in the vessel by calculating the needed amount of disinfectant based on the measurement data of the weighing device.

According to a second aspect, a dental care unit is provided. The dental care unit comprises a disinfection system in accordance with the first aspect.

According to a third aspect, a method for disinfecting the water system in accordance with the first aspect is provided. The method comprises steps of filling a vessel with an amount of water; weighing the water in the vessel; supplying an amount, based on the weight of the water, of disinfectant from the disinfectant container into the vessel; and supplying the concentration of the disinfectant and the water into the water system of the dental care unit.

### BRIEF DESCRIPTION OF THE DRAWINGS

The present disclosure will be better understood from the following Detailed Description read in light of the accompanying drawings, wherein:
**FIG. 1** shows a partial cross-sectional view of a disinfection system for a water system of a dental care unit.
**FIG. 2** shows a partial cross-sectional view of another embodiment of the disinfection system for a water system of a dental care unit.
**FIG. 3** shows a partial cross-sectional view of the water system for a dental care unit in an assembled state thereof,
**FIG. 4** depicts a dental care unit comprising a water system.

Unless specifically stated to the contrary, any drawing of the aforementioned drawings may be not drawn to scale such that any element in said drawing may be drawn with inaccurate proportions with respect to other elements in said drawing in order to emphasize certain structural aspects of the embodiment of said drawing.

Moreover, corresponding elements in the embodiments of any two drawings of the aforementioned drawings may be disproportionate to each other in said two drawings in order to emphasize certain structural aspects of the embodiments of said two drawings.

### DETAILED DESCRIPTION

Concerning water systems and dental units discussed in this detailed description, the following shall be noted.

A "dental unit", or a "dental care unit", or a "dental treatment unit" may refer to a piece of equipment used in provision of dental care. A dental care unit may generally comprise any part(s) or element(s) necessary or beneficial for provision of dental care, e.g., a chair, a light source, one or more dental instruments, an instrument holder, and/or data input/output devices, such as a keyboard, a touchscreen, and/or a viewscreen. A dental unit may generally further comprise a water system.

In this specification, a "water system" may refer to a system for providing water for various purposes during use of a dental unit. Such uses may comprise, for example, feeding water through dental instruments for cooling e. g. cutting drill or rinsing chips from the surface of tooth being treated and/ or filling a cup for mouth rinsing. A water system may generally comprise any part(s) or element(s) necessary or beneficial for such provision of water, e.g., a water reservoir, such as a vessel; a water supply line for providing fresh water; one or more pumps; water lines; hoses; fittings; valves; a drainage system; a water purifier; and/or a cleaning device or arrangement for cleaning and disinfection of said water system or a part thereof.

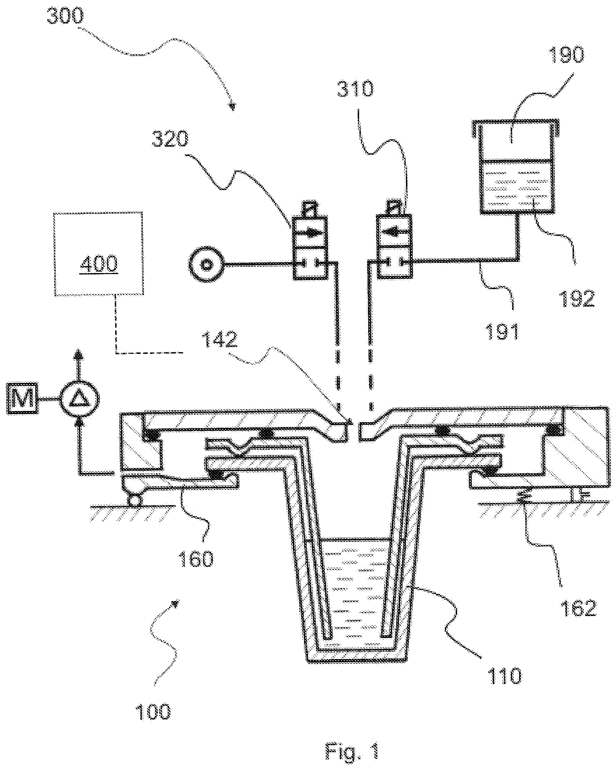

FIG. 1 shows a partial cross-sectional view of a disinfection system for a water system of a dental care unit. Since FIG. 1 depicts a cross-sectional view of the disinfection system 400, FIG. 1 does not limit shapes of the embodiment of FIG. 1 or any part(s) thereof in any direction forming an angle with the cross-sectional plane of FIG. 1.

In this specification, a "vessel" may refer to a hollow container suitable for holding liquid, such as water. A vessel may or may not be (substantially) bowl-shaped and/or cup-shaped.

The disinfection system 300 of a dental unit may comprise a vessel 110 for receiving and holding liquids, such as water and disinfectant, for the water system of the dental unit, and a vessel holder 160 for holding the vessel inside the dental unit. The disinfectant 192 is stored in a disinfectant container 190, from which the disinfectant is supplied into the vessel via a disinfectant supply line 191. The disinfectant is supplied into the vessel via fluid duct 142. Further, the disinfection system comprises a weighing device 162 for determining weight of any liquids in the vessel.

The disinfection container 190 may be located inside the dental unit so that the disinfectant 192 is supplied into the vessel via the disinfectant supply line 191 and the fluid duct 142 by the gravity, i.e. the disinfectant container is located above the vessel. A disinfectant control valve 310 may be provided within the disinfectant supply line 191 for controlling the supply of the disinfectant. The disinfectant control valve 310 may be for example a solenoid valve or any other valve which is suitable to control liquid supply.

The disinfection container 190 may be filled manually by the user but the supply of the disinfectant may be automated.

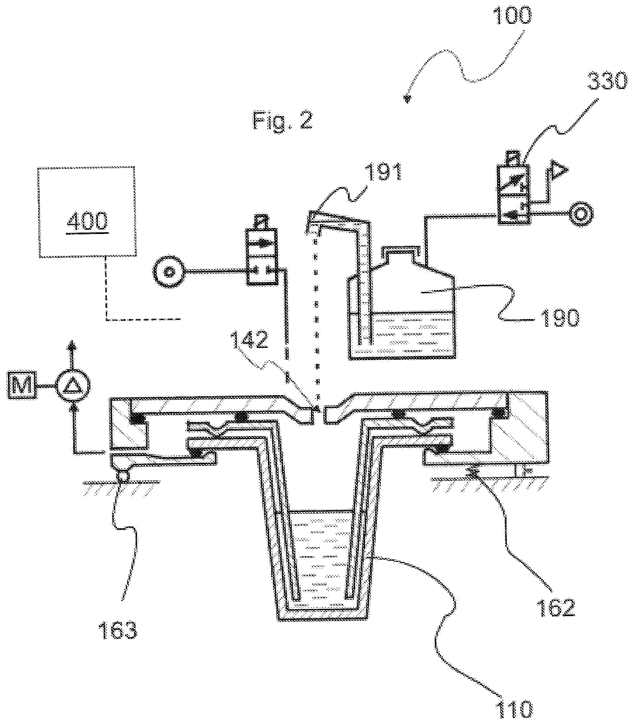

Fig. 2 shows another embodiment of the disinfection system. Only difference of the system of fig. 2 and the system of fig. 1 is that in the system of fig. 2 disinfectant container 190 is pressurized. The disinfectant is supplied into the vessel via a disinfectant supply line 191 and the fluid duct 142 by adding a pressure inside the disinfectant container 190. The system of fig. 2 comprises a pressure control valve 330 for controlling the pressure inside the disinfectant container 190. The disinfectant line may be partially directed upwards so that the disinfectant is not flown out of the disinfectant container 190 unintentionally by the gravity. Thus, there is no need for separate disinfectant control valve to control the supply of the disinfectant into the vessel.

The disinfection system 300 comprises a weighing device 162 for determining weight of any liquids possibly arranged in the vessel 110. Such weighing device may enable determining, for example, automatically, a quantity of liquid(s) inside a vessel, even in the absence of sensor elements in said vessel. Additionally, or alternatively, such weighing device may facilitate disinfection of a water system by increasing precision of mixing ratios between water and disinfectant.

The weighing device may be configured to measure the weight of the vessel and the vessel holder, and set a zero-point based on these weights, i.e. calibrate to show only the weight of liquids in the vessel.

Throughout this specification, a "weighing device", may refer to any device for measuring a weight of an object. A weighing device may generally comprise any part(s) and/or element(s) suitable or necessary for measuring a weight of an object. A weighing device may comprise, for example, a balance scale and/or a force-measuring scale.

In one embodiment, the weighing device comprises a force-measuring scale 162 arranged between the vessel holder 160 and the dental unit, on which the vessel holder is arranged, for measuring the weight of the vessel holder, vessel, the insert and the liquid inside the vessel.

In one embodiment, the system may comprise a pivoting means 163, such as joint, for pivoting the vessel holder about it. In an embodiment, the weighing device is arranged on the other side of the vessel than the pivoting means. However, the weighing device may be on the same side of the vessel as the pivoting means 163.

The disinfectant system may comprise a water controlling valve 320 arranged to control the amount of water supplied into the vessel 110.

The disinfection system comprises a control unit 400. The control unit 400 may be configured to control operation of the disinfection system 300 and the water system 100 of a dental unit. The control unit 400 may be coupled to some or all of the valves of the systems so that it is configured to control the disinfectant valve 310, water control valve 320 and/or pressure control valve 330, i.e. the flows passing through the valves. The control unit 400 may be configured to execute the disinfection process, as described herein, so that the whole process may be executed without manual interaction.

The control unit 400 is coupled to the weighing device 162 to receive a signal from the weighing device 162, which signal discloses the measurement data of the weight.

The control unit determines the needed amount of disinfectant, based on the measurement data of the weight. The control unit may transmit another signal to the disinfectant control valve 310 or the pressure control valve 330 to supply needed amount of disinfectant into to vessel to achieve pre-determined concentration of water and disinfectant for the disinfection process. The control unit may also control the control valves without the measurement data.

The control unit 400 may also be configured execute the circulation process of the disinfection liquid in the water system.

The control unit 400 is configured to receive a signal from the weighing device 162, which signal discloses the measurement data. The control unit determines the needed amount of water, based on the measurement data of the weight, and transmits another signal to the water control valve 320 to supply needed amount of water into to vessel to achieve pre-determined amount of water and for the operation. The control unit may also control the water control valve without the measurement data.

The control unit 400 may be configured to open the water control valve 320, when the weighing device recognizes that the water in the vessel is too low, i.e. the water system is configured to control the amount of water in the system and that the amount is enough for operation. This control may occur even during the operation.

The couplings between the control unit 400 and the other elements of the systems may be a wired coupling or wireless coupling, or it may comprise both wired and wireless elements either as alternatives of each other or augmenting each other.

If the water system 100 is not connected to the water line of a building, i.e. the water for the dental unit is provided with a separate means, e.g. by a bottle, the control unit 400 be arranged to alarm when the amount of water in the vessel is lower than pre-determined level. When the alarm is noticed, a user may fill the vessel from a bottle.

The control unit 400 may be installed inside the dental unit, or it may be installed outside of the dental unit.

In an embodiment, the control unit 400 is connected to a memory comprising a computer program comprising instructions which, when the program is executed by a computer, cause the computer to carry out the disinfection process and/or the water circulating process and embodiments of these described herein.

The control unit 400 may have a central role in the operation of the system. Structurally and functionally it may be based on one or more processors configured to execute machine-readable instructions stored in one or more memories that may comprise at least one of built-in memories or detachable memories.

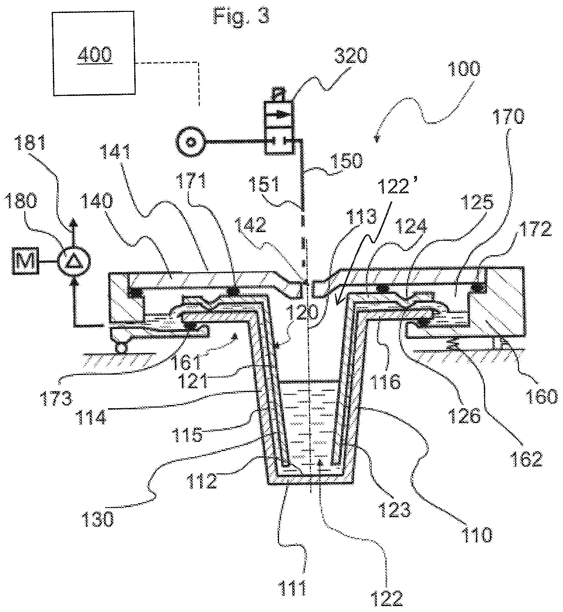

FIG 3. shows an example of a water system of a dental care unit. The water system and parts of it, e.g. the vessel and the vessel holder, described herein may also be part of the disinfection system and, thus, the embodiments described herein may be applied to the disinfection system even when being described as embodiments of a water system.

FIG. 3 depicts a partial cross-sectional view of a water system 100 for a dental care unit according to an embodiment. Since FIG. 3 depicts a cross-sectional view of the water system 100, FIG. 3 does not limit shapes of the embodiment of FIG. 3 or any part(s) thereof in any direction forming an angle with the cross-sectional plane of FIG. 3.

The water system 100, as described for example in FIG.3, comprises a vessel 110 comprising a bottom 111 and a side wall 114. The side wall 114 extends from the bottom 111. The side wall 114 has an inner surface 115.

Herein, an "inner surface" of a side wall of a vessel may refer to a surface of said side wall configured to be in contact with a liquid, when the vessel is used for holding said liquid, or a part thereof.

The vessel 110 may further comprises a flange 116, extending outward from the side wall 114 from an end thereof opposite to the bottom 111. In some embodiments, a vessel may not comprise such flange.

The water system 100 comprises a vessel holder 160, supporting the vessel 110. As such, the water system 100 is depicted in FIG. 3 in an assembled state thereof.

In an embodiment, the vessel holder is a part of the vessel, i.e. the vessel and the vessel holder form a uniform part. It should be noted that any embodiment described herein may comprise uniform vessel and vessel holder, or separate vessel and vessel holder.

Herein, an "assembled state" may refer to a state of a water system wherein a vessel holder supports a vessel. On the other hand, a "disassembled state" may refer to a state of a water system wherein a vessel holder is at a distance from a vessel.

Further, the water system 100 comprises an insert 120 having a tubular wall structure 121. The tubular wall structure 121, as shown for example in FIG. 3, has open ends 122, 122' and an exterior surface 123.

Throughout this disclosure, the term "tubular" is to be interpreted broadly. As such, the term tubular may refer to any elongate and hollow shape, which may have any suitable cross-sectional shape. A tubular element may or may not have a circular, substantially circular, elliptical, or polygonal cross section. Additionally, or alternatively, a tubular element may or may not be tapered, cylindrical, and/or curvilinear. Consequently, a "tubular wall structure" may refer to at least part of an insert, having a tubular shape.

Throughout this disclosure, a "first open end" of a tubular wall structure may refer to a bottom end thereof configured for insertion in a vessel. Additionally, or alternatively, the first open end in the tubular wall structure may refer to said tubular wall structure defining an inner volume, accessible via said first open end. The tubular wall structure of the insert may also have at its top end a second open end.

In this specification, an "exterior surface" of a tubular wall structure may refer to a surface of said tubular wall structure configured to be arranged opposite an inner surface of a vessel in an assembled state of a water system, or a part thereof. Additionally, or alternatively, when a tubular wall structure defines an inner volume, an exterior surface of said tubular wall structure may refer to a surface of said tubular wall structure not connected with said inner volume, or a part thereof.

In FIG. 3, the first open end 122 of the tubular wall structure 121 is arranged in the vessel 110 in such manner that a water conduit 130 is formed. The water conduit 130 of the embodiment of FIG. 3 extends from the first open end 122 of the tubular wall structure 121 and between the inner surface 115 of the side wall 114 and the exterior surface 123 of the tubular wall structure 121. Generally, arranging a vessel and an insert in such manner that such water conduit is formed may enable utilization of a significant portion of water in the vessel, even in the absence of tubing extending upstream of the vessel. Additionally or alternatively, such arrangement of a vessel and an insert may facilitate filling, cleaning, and/or disinfection, especially while there is no tubing extending in a water reservoir.

Herein, a "water conduit" may refer to a channel, passage, or duct for transporting a fluid, such as a liquid, e.g., water.

The exterior surface 123 may be complementarily shaped with the inner surface 115 of the side wall 114 such that the first open end 122 of the tubular wall structure 121 may be arranged in the vessel 110, as depicted in FIG. 3. In embodiments, the exterior surface of the tubular wall structure may be shaped, for example, complementarily, with the inner surface of the side wall of the vessel, enabling arrangement of the first open end of said tubular wall structure in said vessel in an assembled state.

Herein, an exterior surface being "complementarily shaped" with an inner surface may refer to said surfaces being arrangeable so as to form a technically relevant arrangement or element.

The inner surface 115 may have a frustoconical shape. Generally, an inner surface of a side wall may have any suitable shape. In some embodiments, an inner surface of a side wall may have a cylindrical, or conical, or truncated conical, or pyramidal, or truncated pyramidal, or frustal, or frustoconical shape. Such shapes may generally facilitate arranging an insert into a vessel.

Additionally, or alternatively, such shapes may facilitate cleaning a water system by improving access to an inner surface and/or a bottom of a vessel.

The water conduit 130 may have a thickness t of 1-2 mm, for example. Generally, a higher thickness of a water conduit may facilitate usage of higher mass and/or volumetric flow rates in a water system. In embodiments, a water conduit may have any suitable thickness. In some embodiments, a water conduit may have a thickness of 0,1-1 mm, or at least 1 mm, or at most 2 mm, or at most 5 mm, or at most 10 mm.

Herein, a "thickness" of a water conduit may refer to a transverse dimension of said water conduit. A thickness of a water conduit may generally be measured perpendicular to an inner surface of a side wall and/or perpendicular to an exterior surface of a tubular wall structure, i.e. minimum distance between the inner surface of a side wall and exterior surface of the tubular wall structure.

A shown for example in Fig. 3, the tubular wall structure 121 may be removable from the vessel 110 in the disassembled state. A tubular wall structure of an insert being removable from a vessel may facilitate cleaning and/or disinfecting said insert and/or said vessel. Additionally, or alternatively, a tubular wall structure of an insert being removable from a vessel may facilitate usage of automated cleaning tools, such as a dishwasher, for purification of said insert and/or said vessel. In embodiments, a tubular wall structure of an insert may be removable from a vessel in a disassembled state.

In Fig. 3, the vessel 110 has an (imaginary) center line 113, extending through the first open end 122 of the tubular wall structure 121.

Herein, a "center line" may refer to any suitable (imaginary" line. A center line may or may not extend through center point(s), such as a center of mass and/or a centroid, of a vessel. A center line may or may not extend along a symmetry axis and/or a symmetry plane of a vessel. A center line may or may not be arranged (substantially) vertically in an assembled state.

Any transverse distance D_{T}(z), measured perpendicular to and from the center line 113 to the inner surface 115 along a constant azimuthal direction, is non-decreasing with increasing axial distance z from the top surface 112. Such shape of a vessel may generally facilitate insertion of an insert into said vessel and/or removal of an insert from said vessel. In embodiments, a vessel may or may not be shaped in such manner.

In a cross section of the water system 100, as shown for example in FIG. 3, perpendicular to the center line 113, the water conduit 130 may form a continuous loop surrounding the exterior surface 123 of the tubular wall structure 121. Such cross-sectional shape of a water conduit may facilitate usage of higher mass and/or volumetric flow rates in a water system. In embodiments, in a cross section of a water system perpendicular to a center line, a water conduit may or may not form a continuous loop surrounding an exterior surface of a tubular wall structure.

The bottom 111 has a top surface 112, which may be outlined by the inner surface 115 of the side wall 114. Generally, a bottom may have such top surface.

The top surface 112 may be continuous, as shown for example in FIG. 3. In embodiments, a top surface of a bottom may or may not be continuous. For example, in some embodiments, a bottom may comprise an extrusion with a through-hole, the extrusion extending through an open end of a tubular wall structure in an assembled state.

In FIG. 3, a maximum height difference Δhₘₐₓ between the first open end 122 of the tubular wall structure 121 and the top surface 112 of the bottom 111 may be, for example, 6 millimeters (mm). In embodiments, any suitable maximum height difference may exist between the first open end and a top surface. In some embodiments, a maximum height difference less than or equal to 20 mm, or less than or equal to 10 mm, or less than or equal to 8 mm, or less than or equal to 1 mm may be utilized, for example. A lower maximum height difference may generally enable utilization of a higher portion of water storable in a water system.

The vessel holder 160 may comprise a through-hole 161, as shown for example in FIG. 3. The vessel 110 is configured to be arranged in the through-hole 161 in the assembled state of the water system 100. To this end, in the assembled state of the water system 100, the flange 116 of the vessel 110 is coupled with the vessel holder 160, and the side wall 114 of the vessel 110 extends through the through-hole 161. Such arrangement of a vessel in a through-hole of a vessel holder may generally facilitate forming a fluid-tight coupling between said vessel and said vessel holder.

In embodiments, a vessel may be configured to be arranged in a through-hole of a vessel holder in an assembled state of the water system. In embodiments, wherein a vessel is configured in such manner, said vessel may or may not comprise a flange. For example, in some embodiments, a side wall of a vessel may be coupled with vessel holder in the absence of any flange in said vessel.

As depicted in FIG. 3, the insert 120 may be supported by the vessel 110 in the assembled state of the water system 100. Such arrangement may generally facilitate forming a water conduit between an inner surface of a side wall and an exterior surface of a tubular wall structure. In embodiments, an insert may or may not be supported by a vessel in an assembled state of a water system. Generally, an insert may be supported by any suitable means in an assembled state of a water system. For example, in some embodiments, wherein a water system comprises a frame and/or a vessel holder, an insert may be supported by said frame and/or said vessel holder.

The insert 120 may comprise a projecting part 124, such as flange, extending from the tubular wall structure 121. In embodiments, an insert may or may not comprise such projecting part.

The projecting part 124 may comprise a plurality of depressions, each depression 125 of the plurality of depressions providing a supporting surface 126. In embodiments, a projecting part may or may not comprise a support element, such as a depression or a protrusion, for providing a supporting surface.

The supporting surfaces 126 may be configured to be connected with the flange 116 of the vessel 110 in the assembled state of the water system 100, as shown for example in FIG. 3. In embodiments, a supporting surface may or may not be configured to be connected with a vessel, e.g., a flange thereof, in an assembled state of a water system. In some embodiments, an insert may comprise a support element, such as a depression or a protrusion, in the absence of a projecting part and/or a vessel may comprise a support element for supporting an insert. Generally, a plurality, i.e., two or more, three or more, etc., of support elements may be used. In some embodiments, a separate support element, such as perforated ring, may be arranged between a vessel and an insert.

In the embodiment, as shown for example in FIG. 3, the vessel 110 and the insert 120 may be formed of a plastic material. Such material choice may facilitate usage of high-throughput fabrication methods in manufacturing of a vessel and/or an insert. Additionally, or alternatively, usage of plastic materials may reduce corrosion-related effects, when a vessel and/or an insert is subjected to cleaning agents. In embodiments, a vessel and/or an insert may comprise or be formed of any suitable material(s), such as plastics, metals, and/or ceramics.

In FIG. 3, the water system 100 comprises a lid 140. The lid 140 has a top surface 141, facing upwards in the assembled state of the water system 100. The lid 140 is configured to couple with, more specifically rest on and be supported by, the insert 120 in the assembled state of the water system 100. In said other embodiments, said lid may or may not be configured to couple with, e.g., rest on and/or be supported by, an insert in an assembled state.

The lid 140, as shown for example in FIG. 3, may comprise a fluid duct 142. The fluid duct 142 is configured to provide a fluid communication path between the water conduit 130 and ambient environment in the assembled state of the water system 100. Generally, a lid with such fluid duct may facilitate provision of replacement air into a vessel, when a water system is used. Provision of replacement air may, in turn, simplify an overall design of a water system and/or reduce manufacturing constraints thereof.

Throughout this specification, "ambient environment" may refer to any surroundings of a dental unit and/or a water system thereof. Additionally, or alternatively, an ambient environment may refer to ambient gas, such as ambient air and/or gas atmosphere, surrounding a dental unit and/or a water system thereof.

Regardless whether or not a lid is arranged to the water system, the second open end 122' of the insert is preferably in connection with the ambient environment.

In the embodiment, the water system 100 may comprise a fluid-tight first seal 171 joining the insert 120 with the lid 140, a fluid-tight second seal 172 joining the lid 140 and the vessel holder 160, and/or a fluid-tight third seal 173 joining the vessel holder 160 with the vessel 110. In embodiments, a water system may or may not comprise such first seal, such second seal, and/or such third seal.

In embodiments wherein the vessel and the vessel holder form a uniform part, there is no need for third seal 173 for joining the vessel holder with the vessel.

In this specification, a "seal" may refer to any part, element, or structure suitable for providing a fluid-tight, e.g., liquid-tight, such as water-tight, and/or gas-tight, such as air-tight, coupling between a first object and a second object coupled with the first object. A seal may join such first object with such second object. Additionally, or alternatively, such second object may be coupled with such first object via a seal. A seal may comprise any suitable element(s) for provision of such fluid-tight coupling, for example, a gasket, such as an O-ring, or a sealant, or the like.

Since the water system 100 of the embodiment of FIG. 3 comprises the first seal 171, the second seal 172, and the third seal 173, a collection space 170 is defined. The water conduit 130 extends from the open end 122 of the tubular wall structure 121 to the collection space 170 between the inner surface 115 of the side wall 114 and the exterior surface 123 of the tubular wall structure 121 to the collection space 170. As such, the water conduit 130 may transport water towards the collection space 170 from the vessel 110, when the water system 100 is used. Such collection space may generally simplify a structure of a water system. Additionally, or alternatively, such collection space may facilitate usage of more rigid parts and/or elements in a water system, which may, in turn, facilitate mechanical and/or automated cleaning of said water system. In other embodiments, a water system may not comprise such collection space.

The collection space 170, as shown for example in FIG. 3, is in fluid communication with the ambient environment via the water conduit 130 and the fluid duct 142. In embodiments, wherein a collection space is defined due to a water system comprising a first seal, a second seal, and/or a third seal, said collection space may or may not be fluid communication with an ambient environment via a water conduit and a fluid duct of a lid.

The water system 100 may further comprise a pump 180, which may be arranged upstream of the collection space 170. The pump 180 may be used to effect fluid flow, e.g., water flow, in the water conduit 130. Such arrangement of a pump may, for example, increase fluid-tightness of a first seal, a second seal, and/or a third seal. In embodiments, a water system may or may not comprise such pump. In embodiments, wherein a pump is arranged upstream of the water conduit for effecting fluid flow therein, any suitable type of pump, for example, a positive displacement pump, may be used.

As shown for example in FIG. 3, the water system 100 may further comprise a water delivery line 181. The water delivery line 181 provides a fluid communication path after the collection space 170 and/or the pump 180. The water delivery line may comprise a water control valve 320 arranged to control the amount of water supplied into the vessel.

Herein, a "water delivery line" may refer to a fluid flow line configured to distribute water from a water reservoir of a water system within said water system. A water delivery line may be configured, for example, to supply water via dental instruments into a patient's mouth and/or via a tap to a cup, when a water system is used. In embodiments, a water system may or may not comprise a water delivery line. In embodiments, wherein a water system comprises a water delivery line, a water delivery line may or may not be in fluid communication with a collection space.

As shown for example in FIG. 3, the water system 100 may further comprise a water supply line 150. In embodiments, a water system may or may not comprise a water supply line. For example, in some embodiments, a water system may be supplied with water manually.

The water supply line 150 may be configured to supply water, e.g., tap water from a public tap water network, into the vessel 110 via the fluid duct 142 of the lid 140, whenever required. Such fluid duct may generally facilitate provision of water into a vessel, when a water system is used. In embodiments, a water system may or may not comprise a water supply line configured in such manner.

The water supply line 150 may have a supply line end 151. In the assembled state of the water system 100, the supply line end 151 is arranged above the fluid duct 142 of the lid 140. In the assembled state, a minimum height difference Δhₘᵢₙ between the top surface 141 of the lid 140 and the supply line end 151 may be, for example, 5 mm, 15 mm, 20 mm, 30 mm, or 50 mm. Generally, a higher minimum height difference between a top surface and a supply line end may facilitate preventing backflow of water from a vessel into a water supply line, when a water system is used. Protection against pollution of potable water and backflow prevention are discussed, for example, in standard BS EN 1717. In embodiments, any suitable minimum height differences may be used. In some embodiments, a minimum height difference between a top surface and a supply line end in an assembled state of a water system may be at least 10 mm, or at least 20 mm.

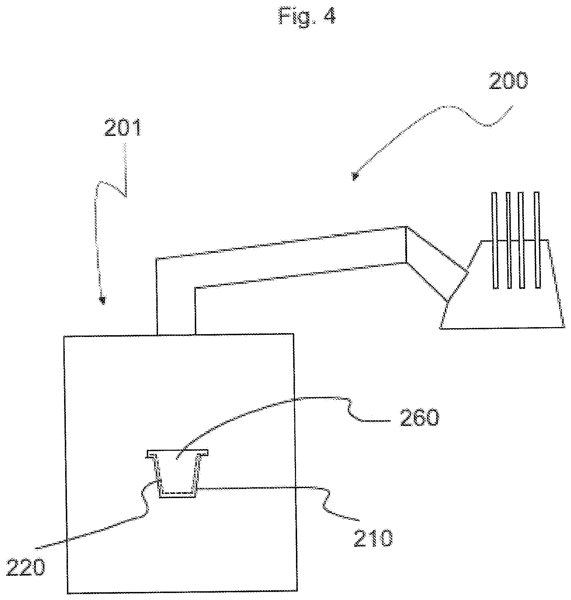

FIG. 4 depicts schematically a dental care unit 200 according to an embodiment. The embodiment of FIG. 4 may be in accordance with any of the embodiments disclosed with reference to, in conjunction with, and/or concomitantly with FIG. 3. Additionally, or alternatively, although not explicitly shown in FIG. 4, the embodiment of FIG. 4 or any part thereof may generally comprise any features and/or elements of any of the embodiment of FIGs. 1-3.

The dental care unit 200 comprises a water system 201. The water system 201 comprises a vessel 210 and an insert 220. The vessel 210 and the insert 220 may be arranged inside or outside of a housing or the like. The water system 201 further comprises a vessel holder 260.

In operation, disinfecting is carried out by the following steps:
The vessel is filled with an amount of water, which amount may be defined by the user. The water in the vessel is weighed by the weighing device and an amount, based on the weight of the water, of disinfectant from the disinfectant container into the vessel. The concentration of the disinfectant and the water is supplied into the water system of the dental unit. Further, the concentration of the disinfectant and the water may be removed from the water system and fresh water is supplied into the vessel. The fresh water may be used to rinse the water system to ensure that the disinfectant is removed from water system and the dental unit is ready to operate. All of the above steps or some of the steps may be executed automatically or manually.

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

The components of the example embodiments may include computer readable medium or memories for holding instructions programmed according to the teachings and for holding data structures, tables, records, and/or other data described herein. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, non-volatile media, volatile media, transmission media, and the like.

It is obvious to a person skilled in the art that with the advancement of technology, the basic idea of the invention may be implemented in various ways. The invention and its embodiments are thus not limited to the examples described above, instead they may vary within the scope of the claims.

It will be understood that any benefits and advantages described above may relate to one embodiment or may relate to several embodiments. The embodiments are not limited to those that solve any or all of the stated problems or those that have any or all of the stated benefits and advantages.

The term "comprising" is used in this specification to mean including the feature(s) or act(s) followed thereafter, without excluding the presence of one or more additional features or acts. It will further be understood that reference to 'an' item refers to one or more of those items.

### REFERENCE SIGNS

| | | | |
|---|---|---|---|
| Δhₘₐₓ | maximum height difference | | |
| Δhₘᵢₙ | minimum height difference | | |
| t | thickness | | |
| D_{T}(z) | transverse distance | | |
| z | axial distance | | |
| 100 | water system | 161 | through-hole |
| 110 | vessel | 162 | weighing device |
| 111 | bottom | 170 | collection space |
| 112 | top surface | 171 | first seal |
| 113 | center line | 172 | second seal |
| 114 | side wall | 173 | third seal |
| 115 | inner surface | 180 | pump |
| 116 | flange | 181 | water delivery line |
| 120 | insert | 190 | disinfectant container |
| 121 | tubular wall structure | 191 | disinfectant supply line |
| 122 | first open end | 192 | disinfectant |
| 122' | second open end | 200 | dental unit |
| 123 | exterior surface | 201 | water system |
| 124 | projecting part | 210 | vessel |
| 125 | depression | 220 | insert |
| 126 | supporting surface | 260 | vessel holder |
| 130 | water conduit | 300 | disinfection system |
| 140 | lid | 310 | disinfectant control valve |
| 141 | top surface | | |
| 142 | fluid duct | 320 | water control valve |
| 150 | water supply line | 330 | pressure control valve |
| 151 | supply line end | 400 | control unit |
| 160 | vessel holder | | |

## Claims

1. A disinfection system for a water system of a dental care unit, the disinfection system (300) comprising:
- a vessel (110) for receiving and holding liquids for the water system of the dental care unit;
- a vessel holder (160) for supporting the vessel inside the dental care unit; and
- disinfectant container (190) for storing disinfectant and a disinfectant supply line (191) for supplying disinfectant from the disinfectant container (190) into the vessel (110) via a fluid duct (142);
**characterized in that** the system comprises a weighing device (162) for determining weight of any liquids in the vessel (110) and a control unit (400), which is configured to calculate the needed amount of disinfectant for achieving a pre-determined concentration of the disinfectant and the water in the vessel (110) by calculating the needed amount of disinfectant based on the measurement data of the weighing device (162).

2. A disinfection system according to claim 1, wherein the weighing device (162) is arranged to measure the weight of the vessel holder (160), vessel (110) and the liquid inside the vessel.

3. A disinfection system according to claim 1 or 2, wherein the weighing device (162) comprises a force-measuring scale arranged between the vessel holder (162) and the dental care unit.

4. A disinfection system according to claim 3, wherein the disinfection system (300) comprises pivoting means (163) arranged to pivot the vessel holder (160) about it, and the weighing device (162) is arranged on the other side of the vessel (110) than the pivoting means (163).

5. A disinfection system according to any of the preceding claims, wherein the disinfection system (300) comprises a disinfectant valve (310) arranged to control a flow of disinfectant supplied into the vessel (110).

6. A disinfection system according to any of the preceding claims, wherein the disinfection system (300) comprises a water controlling valve (320) arranged to control a flow of water supplied into the vessel (110).

7. A dental care unit comprising the disinfection system (300) for a water system (100) according to any of preceding claims.

8. A method for disinfecting a water system (100) of a dental care unit by the disinfection system (300) according to any of the preceding claims, wherein the method comprises the steps of:
- filling the vessel (110) with an amount of water;
- weighing the water in the vessel (110) to achieve a pre-determined concentration of the disinfectant and the water in the vessel;
- supplying, based on the weight of the water, an amount of disinfectant from the disinfectant container (190) into the vessel (110); and
- supplying the concentration of the disinfectant and the water into the water system of the dental care unit.

9. A method for disinfecting the water system (100) according to claim 8, comprising further steps of:
- removing the concentration of the disinfectant and the water from the water system (100) of the dental unit;
- supplying fresh water into the vessel (110); and
- rinsing the water system (100) of the dental care unit with the water in the vessel (110).

10. A method for disinfecting the water system (100) according to claim 8 or 9, wherein the steps are executed automatically by the control unit (400).

## Patentansprüche

1. Desinfektionssystem für ein Wassersystem einer Zahnpflegeeinheit, wobei das Desinfektionssystem (300) Folgendes umfasst:
- einen Behälter (110) zum Aufnehmen und Lagern von Flüssigkeiten für das Wassersystem der Zahnpflegeeinheit;
- einen Behälterhalter (160) zum Halten des Behälters innerhalb der Zahnpflegeeinheit; und
- einen Desinfektionsmittelbehälter (190) zur Speicherung von Desinfektionsmittel und eine Desinfektionsmittelzufuhrleitung (191) zum Zuführen von Desinfektionsmittel aus dem Desinfektionsmittelbehälter (190) in den Behälter (110) über eine Fluidleitung (142);
**dadurch gekennzeichnet, dass** das System eine Wiegevorrichtung (162) zum Bestimmen eines Gewichts jeglicher Flüssigkeiten in dem Behälter (110) und eine Steuereinheit (400) umfasst, die konfiguriert ist, um die erforderliche Menge an Desinfektionsmittel zu berechnen, um eine vorbestimmte Konzentration des Desinfektionsmittels und des Wassers in dem Behälter (110) zu erreichen, indem die erforderliche Menge an Desinfektionsmittel basierend auf Messdaten der Wiegevorrichtung (162) berechnet wird.

2. Desinfektionssystem nach Anspruch 1, wobei die Wiegevorrichtung (162) konfiguriert ist, um das Gewicht des Behälterhalters (160), des Behälters (110) und der Flüssigkeit innerhalb des Behälters zu messen.

3. Desinfektionssystem nach Anspruch 1 oder 2, wobei die Wiegevorrichtung (162) eine Kraftmesswaage umfasst, die zwischen dem Behälterhalter (162) und der Zahnpflegeeinheit angeordnet ist.

4. Desinfektionssystem nach Anspruch 3, wobei das Desinfektionssystem (300) ein Schwenkmittel (163) umfasst, das konfiguriert ist, um den Behälterhalter (160) darum zu schwenken, und die Wiegevorrichtung (162) relativ zu dem Schwenkmittel (163) auf der anderen Seite des Behälters (110) konfiguriert ist.

5. Desinfektionssystem nach einem der vorhergehenden Ansprüche, wobei das Desinfektionssystem (300) ein Desinfektionsventil (310) umfasst, das konfiguriert ist, um eine Durchflussmenge von in den Behälter (110) zugeführtem Desinfektionsmittel zu steuern.

6. Desinfektionssystem nach einem der vorhergehenden Ansprüche, wobei das Desinfektionssystem (300) ein Wassersteuerventil (320) umfasst, das konfiguriert ist, um eine Durchflussmenge von in den Behälter (110) zugeführtem Wasser zu steuern.

7. Zahnpflegeeinheit mit dem Desinfektionssystem (300) für ein Wassersystem (100) nach einem der vorhergehenden Ansprüche.

8. Verfahren zum Desinfizieren eines Wassersystems (100) einer Zahnpflegeeinheit durch das Desinfektionssystem (300) nach einem der vorhergehenden Ansprüche, wobei das Verfahren die folgenden Schritte umfasst:
- Füllen des Behälters (110) mit einer Wassermenge;
- Wiegen des Wassers in dem Behälter (110), um eine vorbestimmte Konzentration des Desinfektionsmittels und des Wassers in dem Behälter zu erreichen;
- Zuführen, basierend auf dem Gewicht des Wassers, einer Menge an Desinfektionsmittel aus dem Desinfektionsmittelbehälter (190) in den Behälter (110); und
- Zuführen der Konzentration des Desinfektionsmittels und des Wassers in das Wassersystem der Zahnpflegeeinheit.

9. Verfahren zum Desinfizieren des Wassersystems (100) nach Anspruch 8, das ferner die folgenden Schritte umfasst:
- Entfernen der Konzentration des Desinfektionsmittels und des Wassers aus dem Wassersystem (100) der Zahnpflegeeinheit;
- Zuführen von Frischwasser in den Behälter (110); und
- Spülen des Wassersystems (100) der Zahnpflegeeinheit mit dem in dem Behälter (110) enthaltenen Wasser.

10. Verfahren zum Desinfizieren des Wassersystems (100) nach Anspruch 8 oder 9, wobei die Schritte automatisch durch die Steuereinheit (400) ausgeführt werden.

## Revendications

1. Système de désinfection pour un système d'eau d'une unité de soins dentaires, le système de désinfection (300) comprenant :
- un récipient (110) destiné à recevoir et à contenir des liquides pour le système d'eau de l'unité de soins dentaires ;
- un support de récipient (160) destiné à supporter le récipient à l'intérieur de l'unité de soins dentaires ; et
- un contenant de désinfectant (190) destiné à stocker du désinfectant et une ligne d'alimentation en désinfectant (191) destinée à apporter du désinfectant depuis le contenant de désinfectant (190) jusque dans le récipient (110) via une conduite de fluide (142) ;
**caractérisé en ce que** le système comprend un dispositif de pesée (162) destiné à déterminer le poids de tout liquide dans le récipient (110) et une unité de commande (400), qui est configurée pour calculer la quantité nécessaire de désinfectant pour atteindre une concentration prédéterminée du désinfectant et de l'eau dans le récipient (110) en calculant la quantité nécessaire de désinfectant
sur la base des données de mesure du dispositif de pesée (162).

2. Système de désinfection selon la revendication 1, dans lequel le dispositif de pesée (162) est conçu pour mesurer le poids du support de récipient (160), du récipient (110) et du liquide à l'intérieur du récipient.

3. Système de désinfection selon la revendication 1 ou 2, dans lequel le dispositif de pesée (162) comprend une balance de mesure de force agencée entre le support de récipient (162) et l'unité de soins dentaires.

4. Système de désinfection selon la revendication 3, dans lequel le système de désinfection (300) comprend un moyen de pivotement (163) conçu pour faire pivoter le support de récipient (160) autour de lui, et le dispositif de pesée (162) est conçu de l'autre côté du récipient (110) par rapport au moyen de pivotement (163).

5. Système de désinfection selon l'une quelconque des revendications précédentes, dans lequel le système de désinfection (300) comprend une vanne de désinfectant (310) conçue pour commander un débit de désinfectant apporté dans le récipient (110).

6. Système de désinfection selon l'une quelconque des revendications précédentes, dans lequel le système de désinfection (300) comprend une vanne de régulation d'eau (320) conçue pour commander un débit d'eau apporté dans le récipient (110).

7. Unité de soins dentaires comprenant le système de désinfection (300) pour un système d'eau (100) selon l'une quelconque des revendications précédentes.

8. Procédé de désinfection d'un système d'eau (100) d'une unité de soins dentaires par le système de désinfection (300) selon l'une quelconque des revendications précédentes, dans lequel le procédé comprend les étapes consistant à :
- remplir le récipient (110) avec une quantité d'eau ;
- peser l'eau dans le récipient (110) pour obtenir une concentration prédéterminée du désinfectant et de l'eau dans le récipient ;
- apporter, sur la base du poids de l'eau, une quantité de désinfectant depuis le contenant de désinfectant (190) jusque dans le récipient (110) ; et
- apporter la concentration du désinfectant et de l'eau dans le système d'eau de l'unité de soins dentaires.

9. Procédé de désinfection du système d'eau (100) selon la revendication 8, comprenant en outre les étapes consistant à :
- éliminer la concentration du désinfectant et de l'eau du système d'eau (100) de l'unité dentaire ;
- apporter de l'eau douce dans le récipient (110) ; et
- rincer le système d'eau (100) de l'unité de soins dentaires avec l'eau contenue dans le récipient (110).

10. Procédé de désinfection du système d'eau (100) selon la revendication 8 ou 9, dans lequel les étapes sont exécutées automatiquement par l'unité de commande (400).
